Europäisches Patentamt

European Patent Office

Office européen des brevets

(11) Numéro de publication: **0 317 446**
A1

## (12) DEMANDE DE BREVET EUROPEEN

(21) Numéro de dépôt: 88420082.5

(22) Date de dépôt: 07.03.88

(51) Int. Cl.⁴: **B 29 C 45/14**
B 29 D 12/02

(30) Priorité: 16.11.87 FR 8716044

(43) Date de publication de la demande:
24.05.89 Bulletin 89/21

(84) Etats contractants désignés:
AT BE CH DE ES GB GR IT LI LU NL SE

(71) Demandeur: Etablissements MACHURAT & FILS S.A.R.L.
Zone Industrielle Nord
F-01100 Oyonnax (FR)

(72) Inventeur: Machurat, Jacques
Nerciat
F-01870 Groissiat (FR)

(74) Mandataire: Moinas, Michel
Cabinet Michel Moinas 13 Chemin du Levant
F-01210 Ferney-Voltaire (FR)

(54) Moule pour la fabrication de monture de lunettes cintrée en matière plastique.

(57) Le moule pour la fabrication dans une presse de monture de lunettes cintrée en matière plastique comprend un bloc supérieur d'injection de matière plastique convexe et un bloc inférieur d'éjection concave muni d'une tôle de rainurage.

Des moyens (144,140,136,128) sont prévus dans le bloc supérieur d'injection pour maintenir dans leur logement (124) des inserts (152) une fois ceux-ci engagés grâce à une fourche (180) de mise en place des inserts et pour relâcher ces inserts une fois l'injection de matière plastique effectuée.

FIGURE 1

EP 0 317 446 A1

**Description**

## MOULE POUR LA FABRICATION DE MONTURE DE LUNETTES CINTREE EN MATIERE PLASTIQUE

La présente invention concerne un moule pour la fabrication de monture de lunettes cintrée en matière plastique ainsi que la presse munie d'un tel moule et les outils associés.

Un tel moule est essentiellement constitué de deux blocs métallique complémentaires comportant chacun une empreinte : l'une correspondant à la moitié postérieure de la pièce à fabriquer, l'autre à la moitié antérieure respectivement. Si la pièce est cintrée vers l'arrière telle qu'une monture de lunettes, alors le bloc correspondant à la partie postérieure doit être concave et celui correspondant à la partie antérieure doit être complémentaire convexe. Dans une presse verticale, l'injection de matière plastique se fait de préférence par le bloc supérieur de telle sorte que l'éjection est réalisée à partir du bloc inférieur ce qui évite d'endommager la pièce lors de sa chute dans le cas contraire. La bloc d'éjection est normalement muni d'une tôle de rainurage pour former, lors du moulage, le drageoir qui reçoit par la suite les verres de lunettes.

Il est courant, lors de la fabrication de telles lunettes, de disposer en différents points du moule des inserts qui seront pris dans la masse de la monture de lunettes lors du moulage : enjoliveurs ou ténons pour la fixation des branches. On cherche alors à concevoir le moule de telle sorte que ces inserts soient faciles à disposer et qu'ils restent en place lors de la fermeture de la presse. Pour ces raisons, le moule est conçu actuellement de telle sorte que le bloc devant recevoir les inserts soit le bloc inférieur d'éjection.

Dans le cas d'insert devant constituer par la suite l'un des ténons constituant la charnière de fixation de la branche de lunettes, donc devant être disposé aux extrémités de la monture sur la face antérieure, le bloc inférieur d'éjection comportant la tôle de rainurage doit être le bloc convexe. Cette solution actuelle présente de nombreux désavantages.

Premièrement, lorsque l'on souhaite que le point d'injection soit situé sur la face arrière de la plaque nasale dont l'empreinte est donc taillée dans le bloc inférieur, il n'est pas possible, de part la présence de la tôle de rainurage, d'effectuer une injection de plastique directement par le haut. Il faut alors nécessairement faire transiter le plastique dans un conduit taillé dans le bloc inférieur qui débute à l'emplacement du nez, pénètre dans l'épaisseur du bloc et revient en arrière pour réémerger sous la plaque de rainurage à la hauteur de l'empreinte correspondant à la plaque nasale. Ceci implique des pertes de charge importantes lors de l'injection du plastique, des pertes de manières premières supérieures et surtout une éjection de la pièce plus difficile, car il faut prévoir un point de faiblesse du plastique présent dans le conduit et devant se casser rapidement toujours au même endroit. De plus, on constate que le drageoir n'est par façonné aussi profondemment que souhaité.

Deuxièmement, lors de l'ouverture de la presse, les butées d'éjection désolidarisant la monture du bloc d'injection supérieur agissent contre la face postérieure donc frontale et laissent des marques inesthétiques sur cette face.

Enfin et surtout, cette disposition manuelle des inserts dans le bloc est lente et ne peut être accomplie que par des ouvriers qualifiés. L'utilisation de pinces à doigts fins n'améliore guère la vitesse d'exécution et risque en plus de détériorer le moule au fur et à mesure des chocs de la pince contre l'empreinte. Cette opération est encore ralantie par le fait que l'opérateur doit vérifier visuellement que l'insert est bien en place car, dans le cas contraire, non seulement une monture inutile est produite, mais le moule lui-même peut être irrémédiablement endommagé lors de la compression des deux blocs complémentaires l'un contre l'autre.

L'objet de cette invention est de résoudre les problèmes précités en proposant un moule agencé de telle sorte que le positionnement de ces inserts puisse être réalisé en un temps minimum et de manière fiable. Le moule, selon l'invention, doit en outre autoriser l'injection plastique directement vers la face arrière de la plaque nasale.

Ces buts sont atteints, selon l'invention, grâce à un moule comprenant un bloc supérieur d'injection de matière plastique convexe dont l'empreinte correspond à la partie antérieure de la monture, un bloc inférieur d'éjection concave dont l'empreinte correspond à la partie postérieure de la monture et des moyens dans le bloc supérieur d'injection pour maintenir dans leur logement les inserts une fois ceux-ci engagés grâce à un outil et pour relâcher ces inserts une fois l'injection de matière plastique effectuée.

Avantageusement, les moyens maintenant les inserts dans les logements lors de l'opération de moulage comprennent une broche de' maintien émergent sous l'action d'un vérin pneumatique ou électromagnétique transversalement du milieu d'une des parois latérales du logement ; et, actionné par l'insert au travers d'une tige de commande, un interrupteur qui commande l'opération du vérin actionnant la broche et qui autorise la fermeture de la presse pour l'injection de plastique.

Selon un premier mode de réalisation, l'outil permettant d'engager les inserts dans les logements correspondants du moule est essentiellement constitué d'une fourche dont l'extrémité de chacune des branches présente un logement pour l'insert, un ressort facilitant le retrait de l'outil et un orifice de centrage qui, en relation avec des goupilles de centrage correspondantes disposées sur le bloc supérieur d''injection, permet de diriger les deux branches de l'outil vers les logements d'insert de bloc supérieur.

Selon une autre forme d'exécution, l'outil permettant d'engager les inserts dans les logements du moule est essentiellement constitué d'une fourche dont l'extrémité de chacune des deux branches présente un orifice de centrage et un vérin (pneumatique ou électromagnétique) supportant un bloc insert qu'il avance pour pousser l'insert dans son logement correspondant du bloc supérieur lorsqu'un interrupteur situé au centre de la fourche vient buter contre ce bloc supérieur. Utilement, l'orientation de ces vérins selon un axe de rotation transversal à la fourche peut être ajusté grâce à une vis et/ou des goupilles de blocage de position.

Comme on peut facilement le comprendre, le moule selon l'invention est tout particulièrement intéressant dans la mesure où le procédé de positionnement des inserts consiste à disposer ceux-ci dans les logements de la fourche pendant la période de refroidissement correspondant à la fabrication de la monture précédente ; à présenter, une fois la presse ouverte et la monture précédente dégagée, la fourche de telle sorte que les orifices de centrage soient en face de leur goupille de centrage respective et à monter l'outil d'un mouvement franc de telle sorte que chaque insert actionne l'interrupteur correspondant ce qui commande le blocage de l'insert par la broche de maintien et autorise la fermeture de la presse.

L'invention est décrite ci-après de façon plus détaillée à l'aide d'exemples d'exécution, sans caractère limitatif, illustrés au dessin annexé dans lequel :·

- la figure 1 est une vue en perspective du dessous d'un bloc supérieur d'injection et d'un outil de positionnement d'insert, et
- la figure 2 est une vue en perspective d'une variante de l'outil de positionnement de l'insert.

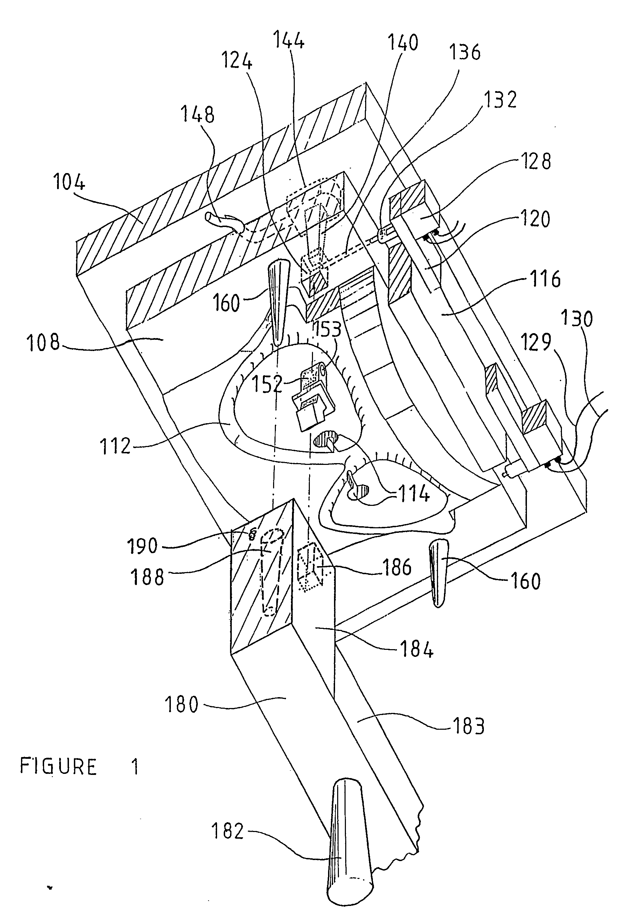

En référence à la figure 1, un bloc supérieur d'injection 108 concave est supporté par une plaque de maintien 104 que l'on fixe dans la presse. Dans ce bloc concave 108 est taillée une empreinte de moule 112 correspondant à la partie antérieure de la monture de lunettes à fabriquer. Deux orifices d'injection de plastique 114 débouchent dans cette empreinte au niveau de la plaquette nasale supportant la monture de lunette sur le nez de l'utilisateur. Deux goupilles de centrage 160 situées de part de d'autre de l'empreinte 112 permettent un positionnement exact du bloc supérieur 108 et de l'ensemble bloc inférieur/tôle de rainurage, bloc non représenté, lors de la fermeture de la presse. Ces goupilles 160 seront aussi mises à profit pour guider un outil comme il sera présenté par la suite.

Dans l'exemple d'exécution de l'invention, l'insert 152 à disposer dans le moule présente trois zones : une partie postérieure (inférieure telle que représentée sur la figure 1) en forme de flèche devant être noyée dans la matière plastique, une partie médiane en forme de collerette marquant la limite de la matière plastique et une partie antérieure (supérieure telle que représentée sur la figure 1) appelée à devenir par la suite l'un des ténons d'un charnière pour la fixation d'une branche de lunettes. Un logement 124 taillé dans le bloc empreinte 108 est prévu pour recevoir la partie antérieure de l'insert 152, la collerette médiane de l'insert venant alors buter contre la surface du bloc. Une tige de commande 140 est mobile à l'intérieur d'un conduit taillé verticalement dans le bloc empreinte 108. L'extrémité inférieure de cette tige émerge dans la face supérieure du logement 124 alors que son extrémité supérieure bute contre un micro-interrupteur 144 disposé dans une cavité ménagée dans la plaque de maintien 104. Les fils 148 de l'interrupteur émergent hors de la plaque de maintien sur le côté du bloc empreinte. La tige 140 est représentée sur la figure 1 avec une section carrée, mais elle peut aussi bien être cylindrique que légèrement conique dans la pratique.

Une broche de maintien 136 est mobile dans un conduit horizontal donc perpendiculaire à la tige de commande. Cette broche de maintien est reliée par un raccord 132 à un vérin 128 qui selon les possibilités de l'atelier peut aussi bien être un vérin pneumatique, ou hydraulique ou électromagnétique. Dans tous les cas, ce vérin 128 est à double effet : c'est-à-dire qu'il peut pousser en avant ou retirer la broche 136 selon que le signal de commande (pression pneumatique, impulsion électrique...) est appliqué sur la ligne 129 ou 130. Les caractéristiques de ce vérin font qu'il a une faible course de l'ordre du millimètre en appliquant une force mesurée, par exemple limitée à 1 N, pour éviter tout coincement mécanique possible. Le support 120 de ce vérin est fixé à une plaque verticale 116 du bloc empreinte.

Associé à ce moule, un outil 180 symétrique comprenant une poignée 182, une barre transversale 183 aux extrémités de laquelle sont montées deux branches verticales 184 permet un engagement simultané et rapide des deux inserts 152 droit et gauche dans leur logement 124 respectif. Cet outil symétrique 180, (représenté partiellement sur la figure 1) sera dénommé par la suite fourche de positionnement. Chaque branche 184 présente en sa face supérieure un ressort 190 inséré à moitié dans un trou vertical ; un orifice de centrage 188 de forme intérieure complémentaire à la goupille de centrage 160 correspondante ; et un logement d'insert 186 dont les dimensions correspondent à la partie postérieure (inférieure) de l'insert 152.

Tel que décrit précédemment, le positionnement des inserts dans le moule est effectué de la manière suivante.

Durant la période pendant laquelle la presse est fermée, l'opérateur dispose dans chacun des logements 186 un insert 152 par sa partie inférieure. La section de ce logement 186 ainsi que la partie inférieure de l'insert sont conçus de telle sorte qu'il soit impossible d'enfoncer l'insert 152 dans le logement 186 à l'envers soit par sa partie supérieure : par exemple la longueur ou la largeur du logement est trop étroite ou la profondeur est trop faible pour que la collerette médiane vienne reposer sur la surface supérieure de la branche 184. Du fait de la durée minimum de 6 s pour le refroidissement d'une pièce plastique dans la presse fermée, l'opérateur dispose d'un délai suffisamment long pour disposer correctement ces inserts 152 dans les logements 186.

Lorsque la presse s'ouvre et que la pièce précédente est éjectée automatiquement, il suffit alors à l'opérateur tenant la fourche 180 par la poignée 182 de présenter les deux branches 184 de telle sorte que les orifices de centrage 188 soient en correspondance avec leur goupille de centrage 160.

il pousse alors d'un mouvement franc la fourche vers le haute ce qui, grâce au système de centrage, amène directement la partie supérieure de l'insert dans le logement 124. Peu avant que la collerette médiane de l'insert vienne buter contre la surface inférieure du bloc empreinte 108, l'extrémité supérieure de cet insert pousse verticalement sur la tige de commande 140 ce qui actionne l'interrupteur 144. L'enclenchement de cet interrupteur 144 déclenche à l'intérieur de l'armoire de commande de la presse un signal en direction du vérin 128 lui ordonnant de pousser en avant la broche 136. Compte-tenu que la collerette médiane de l'insert a été plaquée contre la face inférieure du bloc empreinte à la fin du mouvement, l'orifice 153 se situe maintenant exactement en correspondance avec la broche de maintien 136. Cette broche de maitien 136 pénètre donc légèrement dans cet orifice 153 ce qui bloque cet insert dans le logement 124. La compression du ressort 190 lors de la poussée en avant de la fourche 180 facilite le retrait vers le base de cette fourche. Ainsi, le positionnement de ces inserts dans le moule n'a duré qu'une fraction de seconde.

Lorsque l'opérateur commande la fermeture de la presse, une logique électronique située à l'intérieur de l'armoire de commande de la presse vérifie que l'interrupteur 144 est toujours enclenché, donc que les inserts respectifs sont toujours bien en place. En effet, si l'insert a, pour une raison ou pour une autre, mal été accroché par la broche 136 et s'est dégagé hors de son logement, outre le fait qu'une monture de lunettes inutilisable est produite, un risque important existe que la matière plastique injectée à chaud vienne endommager soit la tige de commande 140, soit la broche de maintien 136 rendant ce système de maintien d'insert inopérant par la suite.

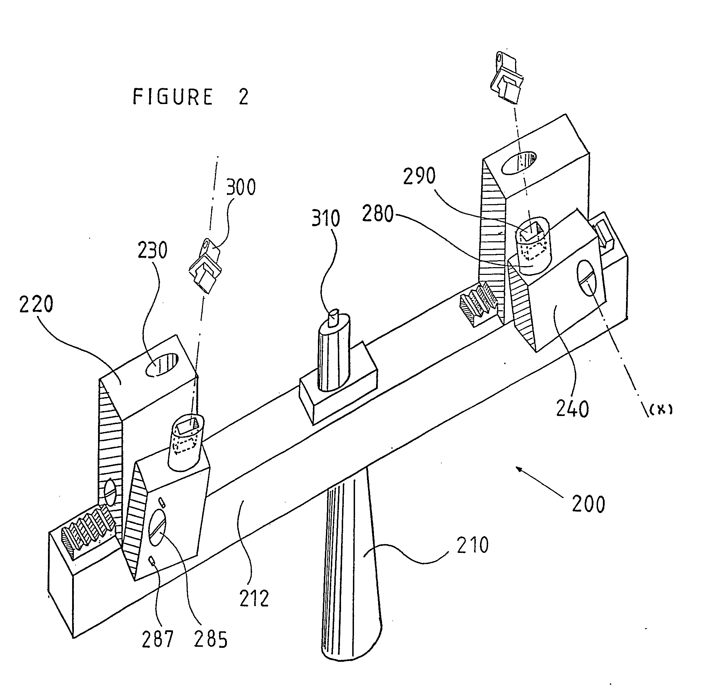

Il apparaît de manière évidente que la fourche 180 décrite précédemment est spécifique pour un moule et un type d'insert donné. A l'opposé, la fourche 200 présentée sur la figure 2 peut être ajustée en position et en inclinaison afin de correspondre à un plus grand nombre de moules. On retrouve, comme précédemment, une poignée 210 surmontée d'une barre transversale horizontale 212. Par contre, dans ce modèle, l'écartement entre les branches de fourche 220 peut être ajusté soit par un système de vis sans fin tel que représenté ou, plus simplement, par des éléments de blocage non représentés que l'on visse sur la traverse. Les orifice de centrage 230 sont taillés verticalement dans ces branches de fourche 220.

Afin de permettre l'engagement d'insert selon des axes non verticaux, ou utilise des vérins 240 montés sur la face latérale des branches respectives. Le mode de fixation de ces vérins sur les branches permet l'ajustement en rotation selon l'axe horizontal x perpendiculaire à la traverse 212. Ce peut être, par exemple, une vis 285 qui, déssérée lors de l'ajustement en inclinaison du vérin, est ressérée fortement pour bloquer le vérin dans sa nouvelle position. Si nécessaire, on peut aussi prévoir une ou plusieurs goupilles 287 traversant simultanément le vérin et la branche. Lorsque l'interrupteur 310 est enclenché, les vérins poussent en avant des blocs port-insert 280 sur une course qui peut être modulée entre 1 à 25 mm. Ces blocs porte-insert 280, contenant le logement 290 spécifique pour le type d'insert, peuvent être dévisser des vérins pour changement.

Ainsi, lors d'un changement de moule dans la presse, on ajuste respectivement l'écartement des branches et l'inclinaison des vérins. Au besoin, on change aussi les blocs 280 selon les nouveaux inserts à engager. Comme précédemment, lorsque la presse est ouverte et que la pièce précédente est dégagée, l'opérateur présente les orifices de centrage 230 devant les goupilles de centrage 160 respectives et lève l'outil d'un mouvement franc. Lorsque l'interrupteur 310 vient buter contre le bloc empreinte 108 ce qui se produit peut avant que les surfaces supérieures des branches ne viennent elle-mêmes buter contre le bloc, achevant le postionnement de la fourche 200 par rapport à ce bloc, alors le deux vérins 240 reçoivent une commande (pneumatique ou signal électrique) pour pousser en avant les blocs porte-insert contenant chacun un insert 300. Comme précédemment, ceux-ci sont engagés dans leur logement 124 respectifs où ils actionnent l'interrupteur 144 ce qui déclenche l'action des vérins 128 correspondants du bloc empreinte supérieur.

Illustré pour des inserts constituant par la suite un charnon pour le maintien d'un branche de lunettes, cette invention peut s'appliquer avec peu de modifications à tout autre type d'insert devant être placé sur la face antérieure d'une monture de lunettes cintrée telles que barre frontale, tige porte-plaquette d'appui nasal ou autres.

De plus, il reste toujours possible de disposer des inserts dans le bloc inférieur manuellement, inserts qui apparaîssent donc sur la face frontale de la monture de lunettes. Ainsi, à l'inverse des moules conventionnels qui ne permettent l'inclusion d'insert que sur une seule face, le moule, selon l'invention, autorise l'inclusion sur les deux faces simultanément. Avantageusement, cet insert frontal peut être un enjoliveur, un plaquage de métal fin ou tout autre insert frontal conventionnel.

## Revendications

1. Moule pour la fabrication dans une presse de monture de lunettes cintrée en matière plastique comprenant un bloc supérieur d'injection de matière plastique et un bloc inférieur d'éjection muni d'une tôle de rainurage caractérisé en ce que le bloc supérieur d'injection est le bloc convexe dont l'empreinte correspond à la partie antérieure de la monture donc que le bloc inférieur d'éjection est le bloc concave dont l'empreinte correspond à la partie postérieure de la monture et en ce que des moyens sont prévus dans le bloc supérieur d'injection pour maintenir dans leur logement des inserts une fois ceux-ci engagés grâce à un outil et pour relâcher ces inserts une fois l'injection de matière plastique effectuée.

2.Moule selon la revendication 1, caractérisé en ce que les moyens maintenant les inserts (152) dans les logements (124) lors de l'opération de moulage comprennent une broche de maintien (136) émergent sous l'action d'un vérin (128) transversalement au milieu d'une paroi latérale du logement ; et, actionné par l'insert au travers d'une tige de commande (140), un interrupteur (144) qui commande l'opération du vérin (128) actionnant la broche (136) et qui autorise la fermeture de la presse pour l'injection de plastique.

3. Outil permettant d'engager des inserts (152) dans des logements (124) d'un moule selon la revendication 1, caractérisé en ce qu'il est essentiellement constitué d'une fourche (180) dont l'extrémité de chacune des deux branches (184) présente un logement (186) pour l'insert ; un ressort (190) facilitant le retrait de l'outil ; et un orifice de centrage (188) qui, en relation avec des goupilles de centrage (160) correspondantes disposées sur le bloc supérieur d'injection (108), permet de diriger la branche de l'outil vers le logement (124) du bloc supérieur.

4. Outil permettant d'engager les inserts dans les logements (124) d'un moule selon la revendication 1, caractérisé en ce qu'il est essentiellement constitué d'une fourche (200) dont l'extrémité de chacune des deux branches (220) présente un orifice de centrage (230) permettant de diriger la branche de l'outil vers le logement (124) du bloc supérieur ; et un vérin (240) supportant un bloc insert (280) qu'il avance pour pousser l'insert dans son logement (124) du bloc supérieur lorsqu'un interrupteur (310) situé au centre de la fourche (200) vient buter contre le bloc supérieur (108).

5. Outil selon la revendication 4, caractérisé en ce que l'orientation des vérins (240) selon un axe de rotation (x) transversal à la traverse (212) de l'outil 200 peut être ajusté grâce à une vis (285) et/ou des goupilles de blocage de position (287).

6. Procédé de fabrication de monture de lunettes cintrée en matière plastique dans une presse comportant un moule selon la revendication 1, caractérisé en ce qu'il consiste à disposer les inserts (152) dans les logements (186,290) de la fourche (180,200) pendant la période de refroidissement correspondant à la fabrication de la monture précédente ; à présenter, une fois la presse ouverte et la monture précédente dégagée, la fourche (180,200) de telle sorte que les orifices de centrage (188,290) soient en face de leur goupille de centrage (160) respectives et à monter la fourche d'un mouvement franc de telle sorte que chaque insert (152) actionne l'interrupteur (144) correspondant au travers de la tige de commande (140) ce qui commande le blocage de l'insert par la broche de maintien (136) et autorise la fermeture de la presse.

FIGURE 1

FIGURE 2

EP 0 317 446 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 422 496 (BRINYL)<br>* En entier *<br>--- | 1,6 | B 29 C 45/14<br>B 29 D 12/02 |
| A | GB-A-2 033 828 (UNIVERSAL OPTICAL CO.)<br>* Page 5, lignes 49-55; figure 10 *<br>--- | 1,6 | |
| A | US-A-2 880 462 (LEHMAN)<br>* Colonne 3, lignes 56-75; figure 2 *<br>--- | 2 | |
| A | FR-A-1 335 422 (MASCHINENFABRIK FAHR)<br>* Résumé, alinéa 2a; figure 2 *<br>--- | 2,6 | |
| A | FR-A-2 300 671 (UNIROYAL)<br>* En entier *<br>--- | 3 | |
| A | PATENT ABSTRACTS OF JAPAN, vol. 10, no. 109 (M-472)[2166], 23 avril 1986; &<br>JP-A-60 240 422 (NIPPON SEIKOSHO K.K.)<br>29-11-1985<br>----- | 3 | |

**DOMAINES TECHNIQUES RECHERCHES (Int. Cl.4)**

B 29 C
B 29 D

Le présent rapport a été établi pour toutes les revendications

| Lieu de la recherche | Date d'achèvement de la recherche | Examinateur |
|---|---|---|
| LA HAYE | 17-02-1989 | BOLLEN J.A.G. |

EPO FORM 1503 03.82 (P0402)